Europäisches Patentamt

European Patent Office

Office européen des brevets

(11) Numéro de publication: **0 245 566**
**A1**

## DEMANDE DE BREVET EUROPEEN

(21) Numéro de dépôt: 86401010.3

(22) Date de dépôt: **12.05.86**

(51) Int. Cl.4 **F21P 5/04** , G09F 19/20 , G02F 1/13 , H04B 9/00

(43) Date de publication de la demande:
**19.11.87 Bulletin 87/47**

(84) Etats contractants désignés:
**CH DE FR GB LI NL**

(71) Demandeur: **Combastet, Michel**
**25, rue du faubourg Saint-Honoré**
**F-75008 Paris(FR)**

(72) Inventeur: **Combastet, Michel**
**25, rue du faubourg Saint-Honoré**
**F-75008 Paris(FR)**

(74) Mandataire: **Armengaud Ainé, Alain**
**Cabinet ARMENGAUD AINE 3 Avenue**
**Bugeaud**
**F-75116 Paris(FR)**

(54) **Processeur de lumière blanche et colorée.**

(57) Processeur de lumière, caractérisé en ce qu'il comprend :

a) un boîtier modulaire (22), comportant une base (24) et une paroi plane (26) espacée de ladite base et parallèle à cette dernière, cette paroi plane constituant la face de sortie de la lumière et étant munie d'une pluralité de fenêtres ;

b) une source lumineuse (10), émettant typiquement de la lumière blanche, disposée à l'intérieur dudit boîtier ;

c) une pluralité de miroirs dichroïches ($16_1$, $16_2$, $16_3$), montés sur ladite base dans ledit boîtier, sur la trajectoire des faisceaux lumineux émis par ladite source lumineuse, et qui sont inclinés par rapport à cette trajectoire de manière que chaque miroir réfléchisse une partie du spectre lumineux émis par la source lumineuse et transmette le spectre résiduel aux miroirs suivants, le long de ladite trajectoire ;

d) une pluralité de cellules à cristal liquide ($20_1$, $20_2$, $20_3$), montées respectivement dans lesdites fenêtres de la paroi plane (26), sur les trajectoires des parties de faisceaux réfléchies par lesdits miroirs, afin de moduler la lumière desdits faisceaux, la disposition étant telle que les faisceaux lumineux modulés sortant de la face de sortie dudit boîtier se superposent et se mélangent ; et,

e) des moyens (28-30), prévus sur ledit boîtier pour réaliser un assemblage, par superposition et/ou juxtaposition, de boîtiers similaires.

Fig.2

## Processeur de lumière blanche et colorée

Cette invention est relative à un processeur universel de lumière blanche et colorée.

L'invention se propose d'apporter un processeur de lumière pour la modulation de lumière colorée, constitué par une source de lumière modulée en couleur, de manière à obtenir un système universel de modulation de la lumière en couleur et en intensité. L'invention vise plus particulièrement la réalisation d'un dispositif efficace de production et d'ajustement de lumière colorée, une sélection économique de couleurs primaires par miroirs dichroïques, et un réglage électronique par des vannes de lumière à cristaux liquides, formant un exemple typique des moyens employés pour composer la couleur et l'intensité d'un faisceau de lumière.

L'éclairage domestique ou industriel, la signalisation et l'affichage, les effets artistiques, les thérapeutiques audio-visuelles, l'expérimentation biologique, la projection lumineuse, la transmission de signaux par voie optique, la colorimétrie, la représentation analogique du son par des couleurs, etc., constituent des domaines d'application possibles et privilégiés du système selon l'invention.

On connaît des systèmes lumineux, notamment d'éclairage décoratif, utilisant une source de lumière généralement blanche et des filtres colorés, permettant d'obtenir des mélanges et des combinaisons de lumière colorée. C'est à ce type de système d'éclairage que l'invention se réfère. Le dispositif selon l'invention constitue une source de lumière modulée en couleur, caractérisée en ce qu'elle comprend :

a) un boîtier modulaire comportant une base et une paroi plane espacée de cette base et parallèle à cette dernière et constituant la face de sortie de la lumière, cette paroi plane étant munie d'une pluralité de fenêtres ;

b) une source lumineuse, émettant typiquement de la lumière blanche, disposée à l'intérieur dudit boîtier ;

c) une pluralité de miroirs dichroïques, montés sur ladite base dans ledit boîtier, sur la trajectoire de faisceaux lumineux émis par ladite source lumineuse, et qui sont inclinés par rapport à cette trajectoire de manière que chaque miroir réfléchisse une partie du spectre lumineux émis par la source lumineuse et transmette le spectre résiduel au miroir suivant, le long de ladite trajectoire ;

d) une pluralité de cellules à cristal liquide, montées respectivement dans lesdites fenêtres de la paroi plane, sur les trajectoires des parties de faisceaux réfléchies par lesdits miroirs, afin de moduler la lumière desdits faisceaux, la disposition étant telle que les faisceaux lumineux modulés sortant de la face de sortie dudit boîtier se superposent et se mélangent ; et,

e) des moyens prévus sur ledit boîtier pour réaliser l'assemblage, par superposition et/ou juxtaposition, de boîtiers similaires.

Selon un mode de réalisation de l'invention, on prévoit trois miroirs dichroïques, réfléchissant les composantes bleue, verte et rouge du faisceau lumineux émis par la source, chaque miroir étant associé à une cellule à cristal liquide réglant l'intensité de chaque voie de couleur. Avec des primaires bleue, verte et rouge convenablement choisies, il est possible de reproduire la plupart des couleurs visibles.

D'autres caractéristiques et avantages de cette invention ressortiront de la description faite ci-après en référence aux dessins annexés, qui en illustrent divers exemples de réalisation, non limitatifs. Sur ces dessins :

-la Figure 1 est une vue schématique du processeur de modulation d'une source de lumière ;

- la Figure 2 est une vue en perspective du processeur de la Figure 1 ;

-la Figure 3 représente la superposition de deux processeurs ;

-la Figure 4 représente la juxtaposition de plusieurs processeurs ;

-la Figure 5 représente la superposition et la juxtaposition combinées de plusieurs processeurs.

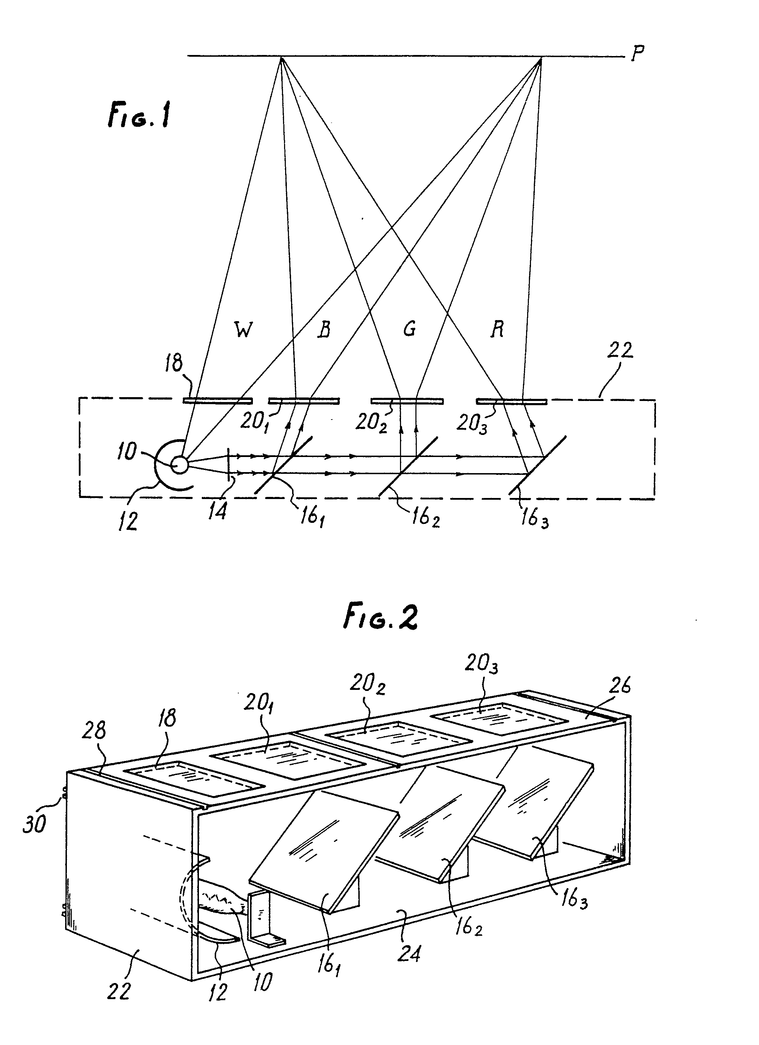

La Figure 1 représente les divers composants du processeur. Celui-ci comporte :

a) un boîtier longitudinal 22, servant de châssis pour supporter les autres composants ;

b) une source lumineuse 10, pouvant être constituée par une lampe à filament, un générateur laser, une lampe flash, etc. munie d'un réflecteur 12, et éventuellement d'une optique 14 ;

c) une pluralité de miroirs dichroïques, placés inclinés sur la trajectoire du faisceau lumineux émis par la source 10, chaque miroir réfléchissant une composante lumineuse du faisceau d'entrée et transmettant au miroir suivant la portion non réfléchie du faisceau. Comme on l'a représenté sur le dessin à titre d'exemple, on peut prévoir trois miroirs dichroïques $16_1$, $16_2$, $16_3$, montés inclinés à 45° environ les uns à la suite des autres, ces miroirs réfléchissant successivement et respectivement les composantes bleue, verte et rouge, B, G, R, du faisceau d'entrée ;

d) une pluralité de moyens modulant l'intensité de la lumière, placés sur la trajectoire des faisceaux réfléchis par les miroirs dichroïques $16_1$, $16_2$, $16_3$, et qui sont constitués par des cellules à

cristal liquide $20_1$ $20_2$, $20_3$, qui jouent le rôle de vannes de lumière, sélectivement sur chaque voie élémentaire de couleur B, G, R, et également sur une voie de lumière blanche W, représentée par une cellule 18 dans cet exemple non limitatif de réalisation.

L'effet obtenu par cette combinaison de composantes est visible sur le plan P de la Figure 1, sur lequel la lumière combinée des différents faisceaux se mélange pour faire la synthèse de la couleur choisie. Cette surface P peut être, par exemple, le plafond, ou un mur blanc d'une pièce d'habitation ; elle peut être aussi un écran translucide.

La Figure 2 illustre un exemple de réalisation dans lequel la source de lumière modulée en couleur selon cette invention se présente sous la forme d'un boîtier parallélépipédique 22, à l'intérieur duquel sont disposés les différents éléments décrits ci-dessus en référence à la Figure 1. Comme on le voit sur cette Figure 2, la source lumineuse 10 et son réflecteur 12, ainsi que les miroirs dichroïques $16_1$, $16_2$, $16_3$, sont montés sur la base 24 du boîtier à l'aide de supports appropriés, et les diverses cellules à cristal liquide 18, $20_1$, $20_2$, $20_3$, sont montées dans des fenêtres aménagées dans la paroi supérieure 26 du boîtier, constituant la face de sortie de ce boîtier, en regard de la base 24. Pour permettre, ainsi qu'on le verra plus loin, de réaliser des assemblages multiples de boîtiers similaires 22, on prévoit des moyens de fixation et d'assemblage tels que, par exemple, des glissières 28 sur la face de sortie 26, et des glissières 30 sur les parois latérales de ce boîtier 22.

Le boîtier 22 peut être réalisé en métal, par pliage d'une tôle, ou en alliage léger coulé sous pression, en matière plastique rigide résistant aux chocs et aux températures élevées, en matériau composite, etc. La source lumineuse 10 peut être une source d'éclairage à filament classique ou à halogènes, une lampe flash, une source de faisceau laser, une source d'infrarouge, une source d'ultra-violet, etc., ou une combinaison de ces différentes sortes de sources.

On peut, bien entendu, intercaler une lentille ou un système optique entre chaque miroir dichroïque et la cellule associée, pour contrôler la répartition de la sortie de la lumière.

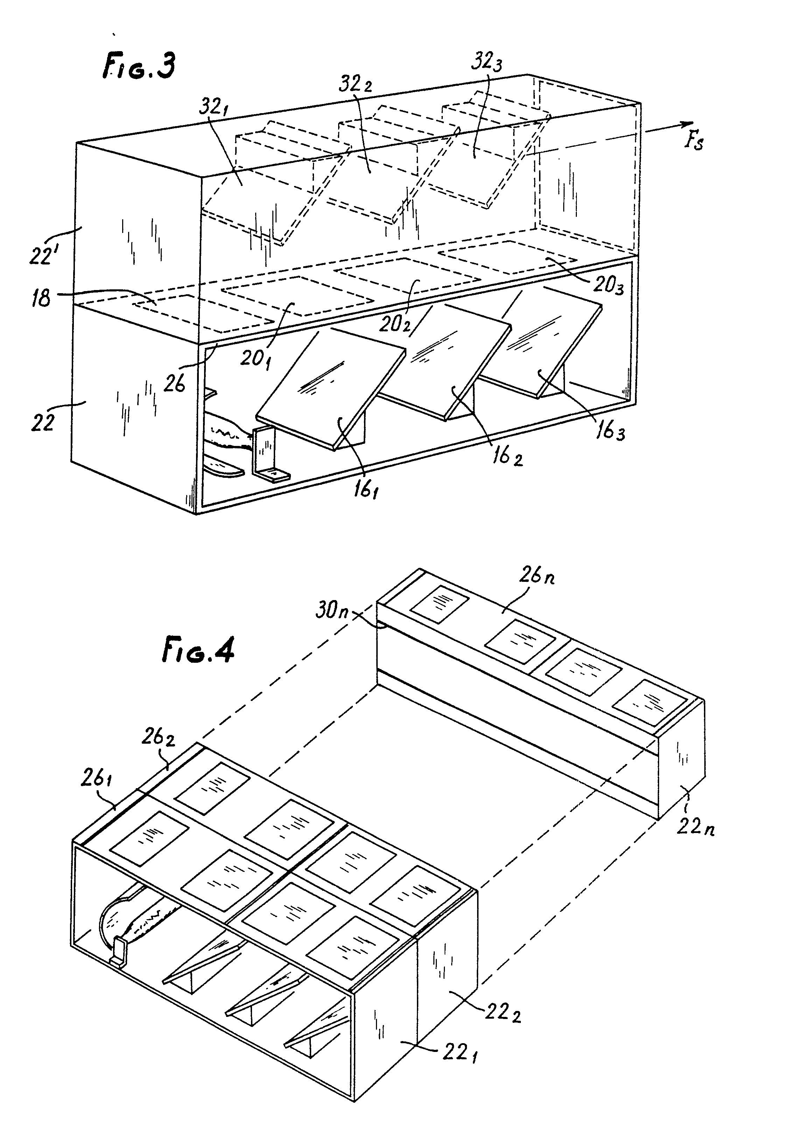

Comme on le comprend, l'invention apporte une source de lumière modulée universelle, contenue dans un module simple et économique. A cette économie s'ajoutent la robustesse, l'efficacité et la fiabilité, par l'emploi de composants statiques, sans pièces mobiles. La conception du module permet de choisir l'économie de moyens, la qualité optique ou la multiplicité des modulations de couleurs, suivant qu'un, deux ou plusieurs modules sont assemblés, selon l'invention, comme les Figures 3 à 5 l'illustrent, et suivant les spécifications et les contraintes de l'application réalisée.

La Figure 3 montre l'exemple de réalisation d'un assemblage vertical par superposition de deux boîtiers identiques 22, 22'. Cet assemblage est réalisé grâce à la présence des glissières telles que 28 (Fig. 2). Le boîtier 22' est absolument identique au boîtier 22 décrit ci-dessus en référence à la Figure 2. Ce boîtier 22', de forme identique au boîtier 22, ne comporte ni source, ni cellule, mais uniquement des miroirs dichroïques $32_1$, $32_2$, $32_3$, associés respectivement aux miroirs $16_1$, $16_2$, $16_3$ du boîtier 22, de manière à obtenir un faisceau unique de sortie $F_S$, dirigé vers l'avant ou vers l'arrière, selon que l'inclinaison à 45° des miroirs est semblable ou symétrique de celle des miroirs du boîtier 22. Bien entendu, la base du boîtier 22', appliquée contre la face supérieure 26 du boîtier 22, est munie de fenêtres qui correspondent à celles du boîtier 22, dans lesquelles sont montées respectivement les cellules 18, $20_2$, $20_2$, $20_3$.

Les boîtiers 22 et 22', selon un mode de réalisation de l'invention, peuvent être remplacés par un boîtier monobloc,assurant les mêmes fonctions que les boîtier 22, 22' réunis.

La Figure 4 représente l'exemple de réalisation d'un assemblage latéral par juxtaposition d'une pluralité de boîtiers identiques $22_1$, $22_2$, ... $22_n$. Dans ce montage, les boîtiers sont tous identiques au boîtier 22 de la Figure 2, c'est-à-dire que chacun d'eux comporte une source lumineuse, un système de miroirs dichroïques et de cellules à cristal liquide, les faisceaux lumineux de sortie étant émis au travers de fenêtres prévues respectivement dans les faces $26_1$, $26_2$, ... $26_n$ des différents boîtiers. Ceux-ci sont assemblés les uns à côté des autres à l'aide de rails-glissières, tels que $30_n$. On obtient ainsi une projection d'une multitude de faisceaux de lumière colorée les uns à côté des autres.

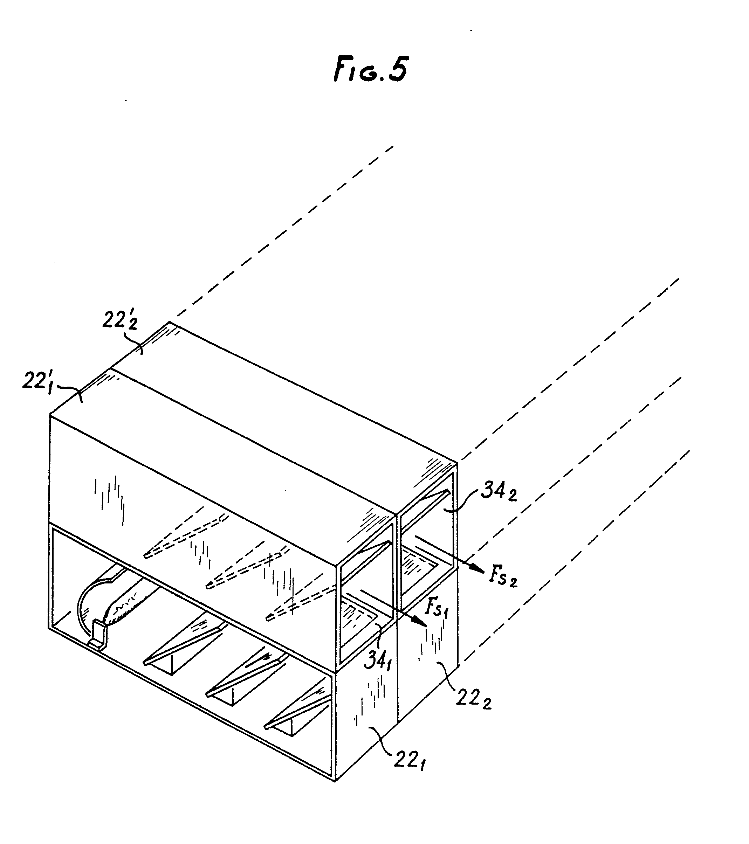

La Figure 5 illustre un montage obtenu par la combinaison des assemblages des Figures 3 et 4. En effet, ce système est obtenu par un assemblage latéral côte à côte de couples de boîtiers superposés 22, 22', du type de la Figure 3. Dans ce montage, les boîtiers inférieurs $22_1$, $22_2$ ... de chaque couple comportent tous les composants décrits ci-dessus en regard de la Figure 2, et les boîtiers supérieurs $22'$, $22'_2$ ... (identiques au boîtier 22' de la Figure 3) ne comportent que des miroirs dichroïques, montés de façon à transmettre un faisceau lumineux unique pour chaque couple $F_{S1}$, $F_{S2}$, etc., respectivement au travers des faces de

sortie $34_1$, $34_2$, .... Dans cette variante, les boîtiers supérieurs constituent les modules de fusion des faisceaux réfléchis séparément dans les boîtiers inférieurs.

On comprend que la source modulaire objet de cette invention permet d'obtenir une pluralité de systèmes lumineux pour les applications déjà mentionnées ci-dessus. La variété des systèmes possibles résulte, d'une part, des diverses combinaisons d'équipement des boîtiers en composants, et, d'autre part, des diverses combinaisons d'assemblage des boîtiers, par juxtoposition et/ou superposition.

Les caractéristiques du boîtier, celles des cellules à cristal liquide, celles des miroirs dichroïques et de la source, permettent, à partir des modules ainsi formés, d'obtenir des faisceaux de lumière simples ou multiples, dont la couleur et l'intensité peuvent être ajustées avec précision et rapidité. Enfin, la dimension du boîtier modulaire et celle de ses composants peuvent être adaptées à la grandeur de l'application, par exemple depuis la taille d'un projecteur de théâtre jus qu'à celle des composants discrets ou intégrés d'une carte de circuit électronique.

Il en résulte une multiplicité d'applications dans les domaines désignés dans le préambule de la présente description.


## Revendications

1. Processeur de lumière, caractérisé en ce qu'il comprend :

a) un boîtier modulaire (22), comportant une base (24) et une paroi plane (26) espacée de ladite base et parallèle à cette dernière, cette paroi plane constituant la face de sortie de la lumière et étant munie d'une pluralité de fenêtres ;

b) une source lumineuse (10), émettant typiquement de la lumière blanche, disposée à l'intérieur dudit boîtier ;

c) une pluralité de miriors dichroïques ($16_1$, $16_2$, $16_3$ ), montés sur ladite base dans ledit boîtier, sur la trajectoire des faisceaux lumineux émis par ladite source lumineuse, et qui sont inclinés par rapport à cette trajectoire de manière que chaque miroir réfléchisse une partie du spectre lumineux émis par la source lumineuse et transmette le spectre résiduel aux miroirs suivants, le long de ladite trajectoire ;

d) une pluralité de cellules à cristal liquide ($20_1$, $20_2$, $20_3$ ), montées respectivement dans lesdites fenêtres de la paroi plane (26), sur les trajectoires des parties de faisceaux réfléchies par lesdits miroirs, afin de moduler la lumière desdits faisceaux, la disposition étant telle que les faisceaux lumineux modulés sortant de la face de sortie dudit boîtier se superposent et se mélangent ; et,

e) des moyens (28-30), prévus sur ledit boîtier pour réaliser un assemblage, par superposition et/ou juxtaposition, de boîtiers similaires.

2. Processeur de lumière selon la revendication 1, caractérisé en ce qu'il comporte également une cellule à cristal liquide (18), montée dans une fenêtre de ladite paroi plane (26), pour moduler un faisceau de lumière blanche émis par ladite source lumineuse (10).

3. Processeur de lumière selon la revendication 1 ou 2, caractérisé en ce qu'il comporte trois miroirs dichroïques ($16_1$, $16_2$, $16_3$) réfléchissant successivement les composantes typiquement bleue (B), verte (G) et rouge (R) du faisceau lumineux émis par ladite source, chaque miroir étant associé à une cellule à cristal liquide qui assure la modulation de la lumière réfléchie par ledit miroir.

4. Processeur de lumière selon la revendication 1, caractérisé en ce que les moyens de fixation et d'assemblage sont constitués par des rails-glissières (28-30).

5. Processeur de lumière caractérisé en ce qu'il est constitué par la superposition de deux boîtiers (22-22') selon la revendication 1, par l'intermédiaire de rails-glissières (28), le boîtier supérieur (22') ne comportant que des miroirs dichroïques ($32_1$, $32_2$, $32_3$), associés respectivement aux miroirs dichroïques du boîtier inférieur (22), pour obtenir un faisceau unique de sortie ($F_S$) par fusion des différents faisceaux.

6. Processeur de lumière, caractérisé en ce que les composants sont disposés selon la revendication 5, et dans lequel l'assemblage de deux boîtiers modulaires est remplacé par un boîtier monobloc.

7. Processeur de lumière, caractérisé en ce qu'il est constitué par la juxtaposition côte à côte d'une pluralité de boîtiers ($22_1$, $22_2$... $22_n$) selon la revendication 1, à l'aide de rails-glissières, et émettant une pluralité de faisceaux les uns à côté des autres.

8. Processeur de lumière, caractérisé en ce qu'il est constitué par la juxtaposition côte à côte de couples de boîtiers ($22_1$, $22'_1$ ; $22_2$, $22'_2$ ... ) selon la revendication 5, les boîtiers supérieurs de chaque couple constituant les modules de fusion des faisceaux réfléchis par les miroirs des boîtiers inférieurs.

9. Processeur de lumière selon l'une quelconque des revendications précédentes, caractérisé en ce qu'on intercale une lentille entre chaque miroir dichroïque et la cellule associée, afin de contrôler la répartition de la sortie de la lumière.

0 245 566

**FIG.1**

W    B    G    R

**FIG.2**

Fig.3

$32_1$  $32_2$  $32_3$

$22'$

$F_s$

18

$20_3$

$20_2$

26

$20_1$

22

$16_3$

$16_2$

$16_1$

$26_n$

$30_n$

Fig.4

$26_2$

$26_1$

$22_n$

$22_2$

$22_1$

# Fig.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 211 132 (NIGG) <br> * Figure unique; revendications 1,4; page 1, ligne 32 - page 3, ligne 14; page 4, lignes 21-26 * | 1,3,6 | F 21 P 5/04 <br> G 09 F 19/20 <br> G 02 F 1/13 <br> H 04 B 9/00 |
| A | | 5 | |
| | --- | | |
| Y | GB-A-2 077 449 (HOEI SANGYO K.K.) <br> * Figure 1; colonne 1, lignes 6-24 * | 1,3,6 | |
| | --- | | |
| A | US-A-3 903 400 (NISENSON) <br> * Figure 1; colonne 2, lignes 13-56; colonne 3, lignes 10-64 * | 1,6,9 | |
| | --- | | DOMAINES TECHNIQUES RECHERCHES (Int. Cl.4) |
| A | GB-A-2 147 444 (RACAL RESEARCH) <br><br> * Figures 1-3; page 1, lignes 71-88 * | 1,4,5, 7,8 | F 21 P <br> G 09 F <br> G 02 F <br> H 04 B |
| | --- | | |
| A | EP-A-0 089 378 (MITSUBISHI DENKI K.K.) <br> * Figure 3; revendications 7,8 * | 1,4,5, 7,8 | |
| | --- | | |
| E | US-A-4 620 791 (M.P. COMBASTET) <br> * En entier * | 1-9 | |
| | ----- | | |

Le present rapport de recherche a été etabli pour toutes les revendications

| Lieu de la recherche | Date d'achevement de la recherche | Examinateur |
|---|---|---|
| LA HAYE | 19-01-1987 | CONRAD V.HEYDENDORFF |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : theorie ou principe a la base de l'invention
E : document de brevet anterieur, mais publie a la date de dépôt ou apres cette date
D : cité dans la demande
L : cite pour d'autres raisons

& : membre de la même famille, document correspondant

OEB Form 1503 03 82